# EUROPÄISCHE PATENTSCHRIFT

(11) **EP 1 083 209 B1**
(45) Veröffentlichungstag und Bekanntmachung des Hinweises auf die Patenterteilung: **23.03.2005**
(21) Anmeldenummer: 00118163.5
(22) Anmeldetag: 30.08.2000
(51) Int. Cl.: C08G 18/42, C08G 18/44, C08G 18/66, C08G 18/78, C08G 18/79, C08G 18/80, C09D 175/06

(54) **Uretdiongruppen und freie Isocyanatgruppen aufweisende Pulverlackvernetzer hoher Funktionalität**
High functionality powder coating crosslinkers having uretdione and free isocyanate groups
Réticulants pour revêtement en poudre à haute fonctionalité ayant des groupes à fonctions uretdione et isocyanate libre

(30) Priorität: 09.09.1999 DE 19943034
(43) Veröffentlichungstag der Anmeldung: 14.03.2001
(73) Patentinhaber: Bayer MaterialScience AG, 51368 Leverkusen (DE)
(72) Erfinder: Laas, Hans-Josef, Dr., 50733 Köln (DE); Freudenberg, Ulrich, Dr., 50259 Pulheim (DE); Halpaap, Reinhard, Dr., 51519 Odenthal (DE); Grahl, Michael, 51371 Leverkusen (DE)

(56) Entgegenhaltungen:
- EP-A- 0 639 598
- US-A- 4 522 975
- US-A- 5 773 550
- US-A- 5 847 044

## Beschreibung

Die Erfindung betrifft neue hochfunktionelle, Uretdiongruppen enthaltende Polyadditionsverbindungen, ein Verfahren zu ihrer Herstellung und ihre Verwendung als Ausgangskomponente bei der Herstellung von Polyurethankunststoffen, insbesondere als Vernetzer für Hitze-vernetzbare Pulverlacke.

Als blockierungsmittelfreie Vernetzer für hoch wetterbeständige Polyurethan(PUR)-Pulverlacke finden heute in zunehmendem Maße Uretdiongruppen aufweisende Polyadditionsverbindungen Verwendung. Als Vernetzungsprinzip wird bei diesen Verbindungen die thermische Rückspaltung der Uretdionstrukturen in freie Isocyanatgruppen und deren anschließende Reaktion mit einem hydroxyfunktionellen Bindemittel genutzt.

Obwohl Uretdionpulverlackvernetzer bereits seit längerem bekannt sind, konnten sie sich im Markt bisher nicht entscheidend durchsetzen. Die Ursache hierfür liegt u.a. zum einen im vergleichsweise niedrigen Isocyanat-Gehalt der zur Zeit kommerziell verfügbaren Produkte, zum anderen in ihrer niedrigen mittleren Funktionalität, die häufig sogar weniger als 2,0 beträgt. In Hinblick auf eine ausreichende Vemetzungsdichte, bei Lacken und Beschichtungen gleichbedeutend mit guten Beständigkeitseigenschaften, sind aber gerade Vernetzerkomponenten mit hohem NCO-Gehalt und einer möglichst hohen, mindestens 2,0 betragenden Funktionalität erwünscht.

Die EP-A 45 994 beschreibt Umsetzungsprodukte aus einem linearen, difunktionellen IPDI-Uretdion und unterschüssigen Mengen einfacher, gegebenenfalls Ethersauerstoff aufweisender Diole als blockierungsmittelfreie Pulverlackvernetzer. Diese Polyadditionsprodukte, die endständig bis zu 8 Gew.-% an unblockierten freien Isocyanatgruppen aufweisen können, zeichnen sich zwar durch hohe Isocyanat-Gesamtgehalte (Summe aus freien und in Form von Uretdionguppen intern blockiert vorliegenden Isocyanatgruppen) und eine Funktionalität von 2,0 aus, ihre Herstellung, insbesondere im technischen Maßstab, ist jedoch schwierig.

Da die Rückspaltung der thermolabilen Uretdionstrukturen in Gegenwart von hydroxyfunktionellen Reaktionspartnem bereits bei 110 C merklich einsetzt, darf diese Temperatur bei der Synthese uretdiongruppenhaltiger Polyadditionsverbindungen möglichst nicht überschritten werden. In diesem Temperaturbereich weisen die in der EP-A 45 994 beschriebenen Produkte allerdings so hohe Schmelzviskositäten auf, daß ihre Produzierbarkeit in der Schmelze aufgrund der ungenügenden Rührbarkeit im technischen Maßstab an Grenzen stößt. Großtechnisch lassen sich solche Uretdionvernetzer lediglich in gegenüber Isocyanaten inerten Lösemitteln gelöst herstellen. Anschließend muß dann in einem zusätzlichen Verfahrensschritt das Hilfslösemittel abgetrennt werden. Ein in der EP-A 669 354 beschriebenes lösemittelfreies Herstellverfahren für solche Polyadditionsverbindungen, bei dem die Edukte in speziellen Reaktionsschnecken oder Extrudern unter der Einwirkung hoher Scherkräfte miteinander umgesetzt werden können, ist hingegen apparativ sehr aufwendig und teuer.

Der Hauptnachteil der in der EP-A 45 994 beschriebenen Polyadditionsprodukte liegt aber in dem relativ hohen Gehalt an unblockierten freien Isocyanatgruppen, die bereits während der Pulverlackherstellung, üblicherweise durch Schmelzextrusion bei ca. 100°C, mit dem hydroxyfunktionellen Bindemittel abreagieren. Derart vorvernetzte Pulverlacke zeigen beim Einbrennprozeß ein so ungünstiges rheologisches Verhalten, daß sie zu Beschichtungen mit nur mäßigen optischen Eigenschaften, insbesondere einem völlig unzureichenden Verlauf, aushärten.

Das Problem der unerwünschten Vorvernetzung besteht prinzipiell für sämtliche PUR-Pulverlackhärter, die einen hohen Gehalt an freien Isocyanatgruppen aufweisen. Zum Beispiel bei den in EP-A 45 996 und EP-A 45 998 beschriebenen blockierungsmittelfreien Pulverlackvernetzern aus linearem IPDI-Uretdion und einfachen Diolen werden daher die endständig freien Isocyanatgruppen zumindest teilweise mit Monoaminen oder Monoalkoholen umgesetzt. Auf diese Weise läßt sich die störende Vorreaktion im Extruder zwar unterbinden, der Kettenabbruch mit einer monofunktionellen Verbindung verringert allerdings deutlich den Isocyanat-Gesamtgehalt, gleichzeitig sinkt die mittlere Funktionalität auf Werte unter 2,0 ab. Darüber hinaus weisen auch die Produkte dieser beiden Veröffentlichungen im Bereich der Rückspalttemperatur von Uretdiongruppen noch so hohe Schmelzviskositäten auf, daß sie sich sicher und reproduzierbar nur in Lösung oder nach dem aufwendigen Verfahren der EP-A 669 354 herstellen lassen.

Die Herstellung von Uretdionpulverlackvernetzern unter Verwendung von estergruppen- bzw. carbonatgruppenhaltigen Kettenverlängerungsmitteln ist Gegenstand der EP-A 639 598. Die nach diesem Verfahren erhältlichen Produkte weisen bereits bei Temperaturen nur wenig oberhalb ihres Schmelzpunktes so niedrige Schmelzviskositäten auf, daß erstmals eine lösemittelfreie Produktion in einfachen Rührapparaturen möglich wird. Auch die in der EP-A 720 994 beschriebenen Uretdionvernetzer, bei denen Dimerdiole zur Kettenverlängerung eingesetzt werden, besitzen für eine lösemittelfreie Herstellung ausreichend niedrige Schmelzviskositäten. Aufgrund des relativ hohen Molekulargewichtes der eingesetzten Kettenverlängerungsmittel weisen die Produkte beider Veröffentlichungen jedoch gegenüber denen der EP-A 45 996 nochmals erniedrigte Isocyanat-Gesamtgehalte auf .

Nach der Lehre der EP-A 669 353 lassen sich durch lösemittelfreie Umsetzung linearer IPDI-Dimerisate mit molar überschüssigen Mengen an Diolen und/oder Polyesterdiolen in speziellen Intensivknetern uretdiongruppenhaltige, endständig Hydroxylgruppen aufweisende Polyurethane einer mittleren Funktionalität von 2,0 herstellen. Die Mitverwendung mindestens trifunktioneller Polyole und/oder verzweigten Polyesterpolyole ermöglicht, wie in der EP-A 825 214 bzw. der EP-A 780 417 gezeigt, sogar die Herstellung OH-endständiger Uretdionvernetzer mit Funktionalitäten zwischen 2 und 3 bzw. ≥ 3. Dem Vorteil der hohen Funktionalität steht bei diesen Polyadditionsverbindungen allerdings als Nachteil entgegen, daß die im Vernetzermolekül vorhandenen Hydroxylgruppen unter Einbrennbedingungen ebenfalls unter Urethanisierung reagieren und so den für die Vernetzung des Bindemittels zur Verfügung stehenden, intern blockierten NCO-Gehalt deutlich verringern.

Aus der EP-A 760 380 sind Uretdionpulverlackvernetzer mit hohen latenten NCO-Gehalten auf Basis von gegebenenfalls isocyanuratgruppenhaltigen HDI-Dimerisaten bekannt. Wie auf Seite 5, Zeile 28 bis 30 und Seite 7, Zeile 7 bis 9 dieser Veröffentlichung beschrieben, fuhren jedoch Produkte mit zu hohem Isocyanuratgehalt bzw. Verzweigungsgrad zu Beschichtungen mit schlechten optischen und auch mechanischen Eigenschaften. Bei der Herstellung von Polyuretdionhärtern nach EP-A 760 380 werden daher verzweigte, isocyanuratgruppenhaltige Ausgangspolyisocyanate im allgemeinen durch die Mitverwendung monofunktioneller Aufbaukomponenten weitgehend "linearisert".

Uretdion- und Isocyanuratgruppen enthaltende Polyadditionsprodukte aus einem durch Trialkylphosphin-Katalyse hergestellten IPDI-Dimerisat, Diolen und/oder disekundären Diaminen als Kettenverlängerer und gegebenenfalls Monoalkoholen oder Monoaminen sind Gegenstand der EP-A 790 266. Diese Produkte können bei hoher Funktionalität auch relativ hohe Anteile an freien Isocyanat-Gruppen und damit einen hohen Isocyanat-Gesamtgehalt aufweisen, ihre Herstellung gelingt aufgrund des stark verzweigten Ausgangspolyisocyanates allerdings ausschließlich in organischer Lösung.

Bislang sind keine Uretdionpulverlackvernetzer bekannt, die sämtlichen Anforderungen der Praxis genügen und insbesondere hohe Gesamtgehalte an Isocyanatgruppen bei möglichst hoher Vernetzerfunktionalität aufweisen und gleichzeitig problemlos in einem einfachen Verfahren zugänglich sind.

Aufgabe der vorliegenden Erfindung war es daher, uretdiongruppenhaltige PUR-Pulverlackvemetzer zur Verfügung zu stellen, die nicht die oben geschilderten Nachteile des Standes der Technik aufweisen.

Diese Aufgabe konnte mit der Bereitstellung der nachfolgend näher beschriebenen erfindungsgemäßen Polyadditionsverbindungen bzw. des Verfahrens zu ihrer Herstellung gelöst werden. Die nachfolgend näher beschriebenen erfindungsgemäßen Polyadditionsverbindungen basieren auf der überraschenden Beobachtung, daß sich durch Umsetzung verzweigter, Uretdion- und Isocyanuratgruppen aufweisender Polyisocyanatgemische mit molar unterschüssigen Mengen Ester- und/oder Carbonatgruppen aufweisender Polyole in einem lösemittelfreien Verfahren in einfachen Apparaturen als Pulverlackvernetzer geeignete Verbindungen herstellen lassen, die in Kombination mit handelsüblichen Pulverlackbindemitteln trotz eines hohen Gehaltes an freien Isocyanatgruppen und trotz hoher Funktionalität Beschichtungen liefern, die sich durch einen hervorragenden Verlauf und sehr hohen Glanz auszeichnen. Dies war überraschend, da nach der Lehre der EP-A 639 598 anzunehmen war, daß solche Ester- und/oder Carbonatgruppen aufweisenden Polyadditionsverbindungen nur bis zu einem Gehalt an freien Isocyanat-Gruppen von maximal 2,0 Gew.-% für den Einsatz als Pulverlackvernetzer geeignet sind, insbesondere da auch in der EP-A 760 380 (S. 7, Zeile 34 bis 40) darauf hingewiesen wird, daß Produkte mit einem zu hohen Gehalt an unblockierten Isocyanat-Gruppen aufgrund der unvermeidlichen Vorvernetzung im Extruder zu Beschichtungen mit unbefriedigenden optischen Eigenschaften führen.

Obwohl in der EP-A 669 354 als geeignete Ausgangsverbindung für die lösemittelfreie Herstellung uretdiongruppenhaltiger Polyadditionsverbindungen in Intensivknetern innerhalb einer langen Reihe einfacher Diole auch Hydroxypivalinsäureneopentylglykolester genannt wird, konnte der Fachmann dieser Veröffentlichung keinerlei konkreten Hinweis darauf entnehmen, daß sich verzweigte, Uretdiongruppen enthaltende Polyisocyanatgemische mit Estergruppen und/oder Carbonatgruppen enthaltenden Polyolen auch in einfachen Rührapparaturen in der Schmelze zu Uretdionpulverlackvemetzern mit sehr hohen Isocyanat-Gesamtgehalten umsetzen lassen, die trotz eines erheblichen Anteils an freien Isocyanatgruppen und hoher Funktionalität mit konventionellen Polyesterpolyolen Lackfilme von hervorragender Qualität ergeben. Vielmehr kann gezeigt werden, daß unter ausschließlicher Verwendung von Hydroxypivalinsäureneopentylglykolester als estergruppenhaltigem Kettenverlängerungsmittel hergestellte verzweigte, Uretdiongruppen enthaltende Pulverlackvernetzer mit freien Isocyanatgruppen im Gegensatz zu den erfindungsgemäßen Verfahrensprodukten zu Beschichtungen mit erheblichen Oberflächenstörungen, insbesondere einem ausgeprägten Orangenschalen-Effekt führen.

Gegenstand der vorliegenden Erfindung sind Polyadditionsverbindungen, die unterhalb von 40°C in fester und oberhalb von 125°C in flüssiger Form vorliegen und
a) bei einer mittleren Isocyanatfunktionalität von 2,1 bis 8,0 einen Gehalt an freien Isocyanatgruppen (berechnet als NCO; Molekulargewicht = 42) von 2,1 bis 6,0 Gew.-%,
b) einen Gehalt an Uretdiongruppen (berechnet als C₂N₂O₂; Molekulargewicht = 84) von 10 bis 18 Gew.-%,
c) einen Gehalt an Urethangruppen (berechnet als -NH-CO-O; Molekulargewicht = 59) von 10 bis 20 Gew.-% und
d) einen Gehalt an Estergruppen -CO-O (berechnet als -CO-O; Molekulargewicht = 44) und/oder Carbonatgruppen -O-CO-O (berechnet als -CO-O; Molekulargewicht = 44) von 1 bis 17 Gew.-% aufweisen
hergestellt durch Umsetzung von Uretdiongruppen enthaltenden Isocyanatkomponenten einer mittleren NCO-Funktionalität von mindestens 2,1, ausgenommen reinen, durch Trialkylphosphin-Katalyse hergestellten Derivaten von 1-Isocyanato-3,3,5-trimethyl-5-isocyanatomethylcyclohexan, mit Ester- und/oder Carbonatgruppen enthaltenden Polyolen, ausgenommen Hydroxypivalinsäureneopentylglykolester.

Gegenstand der Erfindung ist auch ein Verfahren zur Herstellung uretdiongruppenhaltiger Polyadditionsverbindungen, dadurch gekennzeichnet, daß man
A) Uretdiongruppen enthaltende Polyisocyanatgemische einer mittleren NCO-Funktionalität von mindestens 2,1, ausgenommen reine, durch Trialkylphosphin-Katalyse hergestellte Derivate von 1-Isocyanato-3,3,5-trimethyl-5-isocyanatomethylcyclohexan, gegebenenfalls unter Mitverwendung von
B) weiteren Diisocyanaten in einer Menge von bis zu 10 Gew.-%, bezogen auf das Gesamtgewicht der Komponenten A) und B), mit
C) Estergruppen und/oder Carbonatgruppen aufweisenden Polyhydroxylverbindungen eines mittleren Molekulargewichtes von 134 bis 2000, ausgenommen Hydroxypivalinsäureneopentylglykolester, gegebenenfalls unter gleichzeitiger Mitverwendung von
D) weiteren Estergruppen- und Carbonatgruppen-freien Polyhydroxylverbindungen eines Molekulargewichtes von 62 - 400 in einer Menge von bis zu 70 Gew.-%, bezogen auf das Gesamtgewicht der Komponenten C) und D), und/oder gegebenenfalls
E) weiteren gegenüber Isocyanatgruppen reaktiven, monofunktionellen Verbindungen in einer Menge von bis zu 20 Gew.-%, bezogen auf das Gesamtgewicht der Komponenten C), D) und E),
unter Einhaltung eines Äquivalentverhältnisses von Isocyanatgruppen zu gegenüber Isocyanaten reaktiven Gruppen von 1,2 : 1 bis 1,8 : 1 miteinander umsetzt, wobei im übrigen Art und Mengenverhältnisse der genannten Ausgangsstoffe so gewählt werden, daß die resultierenden Verfahrensprodukte den oben unter a) bis d) genannten Bedingungen entsprechen.

Gegenstand der Erfindung ist auch die Verwendung dieser Polyadditionsverbindungen als Ausgangskomponente bei der Herstellung von Polyurethankunststoffen, insbesondere als Vernetzerkomponente in Hitze-vernetzbaren Polyurethan-Pulverlacken bei der Beschichtung beliebiger hitzeresistenter Substrate nach den Methoden der Pulverlacktechnologie.

Ausgangsverbindungen A) für das erfindungsgemäße Verfahren sind durch Modifizierung einfacher Diisocyanate erhältliche, Uretdiongruppen enthaltende Polyisocyanatgemische, die eine mittlere NCO-Funktionalität von 2,1 bis 2,7 aufweisen.

Geeignete Diisocyanate zur Herstellung dieser Polyisocyanatgemische sind grundsätzlich solche des Molekulargewichtsbereichs 140 bis 400 mit aliphatisch, cycloaliphatisch, araliphatisch und/oder aromatisch gebundenen Isocyanatgruppen, wie z.B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis(isocyanatomethyl)-cyclohexan, 1,3-Diisocyanato-2(4)-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 4,4'-Diisocyanatodicyclohexylmethan, 1,3- und 1,4-Phenylendiisocyanat, 1,3- und 1,4-Bis-(isocyanatomethyl)-benzol, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat sowie beliebige Gemische solcher Diisocyanate.

Die als Ausgangsverbindungen A) beim erfindungsgemäßen Verfahren eingesetzten Uretdiongruppen enthaltenden Polyisocyanatgemische weisen eine mittlere NCO-Funktionalität von mindestens 2,1 auf. Hieraus folgt, daß in diesen Polyisocyanatgemischen neben linearen difunktionellen Uretdionstrukturen noch weitere, mindestens trifunktionelle Polyisocyanatmoleküle vorliegen müssen. Bei diesen höherfunktionellen Bestandteilen der Polyisocyanatgemische A) handelt es sich insbesondere um die bekannten Folgeprodukte von Diisocyanaten mit Isocyanurat-, Allophanat-, Biuret-, Urethan- und/oder Iminooxadiazindionstruktur.

Die Herstellung der Ausgangsverbindungen A) kann nach unterschiedlichen Methoden erfolgen, denen im allgemeinen die üblichen literaturbekannten Verfahren zur Oligomerisierung einfacher Diisocyanaten zugrunde liegen, wie sie beispielsweise in J. Prakt. Chem. 336 (1994) 185 - 200, den DE-A'en 16 70 666, 19 54 093, 24 14 413, 24 52 532, 26 41 380, 37 00 209, 39 00 053 und 39 28 503 oder den EP-A'en 336 205, 339 396 und 798 299 beschrieben sind.

Eine Möglichkeit zur Herstellung geeigneter Ausgangsverbindungen A) ist beispielsweise die direkte Oligomerisierung monomerer Diisocyanate zu Uretdiongruppen und höherfunktionelle Strukturen enthaltenden Polyisocyanatgemischen in einem Schritt, z. B. die durch Trialkylphosphine katalysierte Dimerisierung und gleichzeitige Trimerisierung zu Uretdion- und Isocyanuratgruppen aufweisenden Polyisocyanaten (z. B. DE-A 1 934 763 oder DE-A 3 900 053).

Geeignete Ausgangsverbindungen A) lassen sich aber auch nach beliebigen mehrstufigen Verfahren erhalten, bei denen Uretdionbildung und Modifizierung zu höherfunktionellen Strukturen nacheinander in beliebiger Reihenfolge durchgeführt werden. Beispiele für diese Art der Reaktionführung sind z. B. die in US 5 461 135 beschriebene katalytische Dimerisierung monomerer Diisocyanate und anschließende Umsetzung des Reaktionsgemisches mit Alkoholen zu Uretdion- und Allophanatgruppen enthaltenden Polyisocyanaten oder die in WO 99/07765 beschriebene thermische Dimerisierung mit anschließender katalytischer Trimerisierung zu Uretdionund Isocyanuratgruppen aufweisenden Polyisocyanaten.

Besonders geeignete Ausgangsverbindungen A) stellen daneben auch physikalische Abmischungen von separat, beispielsweise nach den obengenannten literaturbekannten Verfahren, hergestellten Uretdiongruppen enthaltenden Polyisocyanaten mit beliebigen höherfunktionellen Polyisocyanaten, beispielsweise solchen vom Isocyanurat-, Allophanat-, Biuret-, Urethan- und/oder Iminooxadiazindiontyp, dar.

Die als Ausgangsverbindungen A) für das erfindungsgemäße Verfahren eingesetzten Uretdiongruppen enthaltenden Polyisocyanatgemische, werden im allgemeinen unmittelbar im Anschluß an ihre oben beschriebene Herstellung durch Modifizierung einfacher Diisocyanate nach bekannten Methoden, beispielsweise durch Dünnschichtdestillation oder Extraktion, vom nicht umgesetzten Diisocyanatüberschuß befreit. Sie weisen daher in der Regel Restgehalte an monomeren Diisocyanaten von weniger als 5 Gew.-%, vorzugsweise weniger als 2 Gew.-%, besonders bevorzugt weniger als 1 Gew.-%, auf.

Unabhängig vom gewählten Herstellverfahren kommen beim erfindungsgemäßen Verfahren als Ausgangskomponenten A) Uretdiongruppen enthaltende Polyisocyanatgemische, mit einem Gehalt an Uretdionstrukturen von 10 bis 25 Gew.-%, vorzugsweise von 12 bis 23 Gew.-%, besonders bevorzugt von 14 bis 20 Gew.-%, und einer mittleren Funktionalität von 2,1 bis 2,7, vorzugsweise von 2,1 bis 2,5, besonders bevorzugt von 2,1 bis 2,3, zum Einsatz.

Bevorzugte Ausgangsverbindungen A) sind dabei Uretdion- und Isocyanuratund/oder Biuretgruppen enthaltende Polyisocyanatgemische auf Basis von Diisocyanaten mit aliphatisch und/oder cycloaliphatisch gebundenen Isocyanatgruppen der oben beispielhaft genannten Art oder deren Gemische. Besonders bevorzugt ist die Verwendung von Uretdion- und Isocyanuratgruppen enthaltenden Polyisocyanatgemischen auf Basis von HDI und/oder IPDI.

Die Verwendung von reinen, durch Trialkylphosphin-Katalyse hergestellten Derivaten von IPDI als alleinige Ausgangsverbindung A) ist beim erfindungsgemäßen Verfahren ausgenommen.

Gegebenenfalls können beim erfindungsgemäßen Verfahren weitere Diisocyanate B) mitverwendet werden. Hierbei handelt es sich beispielsweise um die oben beschriebenen, zur Herstellung der Ausgangsverbindungen A) geeigneten Diisocyanate mit aliphatisch, cycloaliphatisch, araliphatisch und/oder aromatisch gebundenen Isocyanatgruppen. Diese Diisocyanate B) werden, falls überhaupt, in Mengen von bis zu 10 Gew.-%, vorzugsweise bis zu 5 Gew.-%, bezogen auf das Gesamtgewicht der Komponenten A) und B) mitverwendet. Bevorzugte Diisocyanate B), wie sie gegebenenfalls beim erfindungsgemäßen Verfahren mitverwendet werden können, stellen Diisocyanate mit cycloaliphatisch gebundenen Isocyanatgruppen dar. Besonders bevorzugt ist die Verwendung von 1-Isocyanato-3,3,5-trimethyl-5-isocyanatomethylcyclohexan und/oder 4,4'-Diisocyanatodicyclohexylmethan.

Beim erfindungsgemäßen Verfahren kommen Estergruppen und/oder Carbonatgruppen aufweisende Polyhydroxylverbindungen C) mit Ausnahme von Hydroxypivalinsäureneopentylglykolester zum Einsatz, die ein mittleres, aus Funktionalität und Hydroxylzahl berechenbares Molekulargewicht von 134 bis 2000, vorzugsweise 176 bis 1200, und eine mittlere OH-Funktionalität von 2,0 bis 4,0, vorzugsweise von 2,0 bis 3,0, aufweisen. Hierbei handelt es sich beispielsweise um die an sich bekannten Esteralkohole oder Esteralkohol-Gemische, wie sie sich z.B. durch Umsetzung von mehrwertigen Alkoholen mit unterschüssigen Mengen an mehrwertigen Carbonsäuren, entsprechenden Carbonsäureanhydriden, entsprechenden Polycarbonsäureestern von niederen Alkoholen oder Lactonen herstellen lassen.

Zur Herstellung dieser Esteralkohole geeignete mehrwertige Alkohole sind insbesondere solche des Molekulargewichtsbereiches 62 bis 400 wie z.B. 1,2-Ethandiol, 1,2-und 1,3-Propandiol, die isomeren Butandiole, Pentandiole, Hexandiole, Heptandiole und Octandiole, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat.

Die zur Herstellung der Esteralkohole verwendeten Säuren oder Säurederivate können aliphatischer, cycloaliphatischer, aromatischer und/oder heteroaromatischer Natur sein und gegebenenfalls, z.B. durch Halogenatome, substituiert und/oder ungesättigt sein. Beispiele geeigneter Säuren sind beispielsweise mehrwertige Carbonsäuren des Molekulargewichtsbereiches 118 bis 300 oder deren Derivate wie beispielsweise Bernsteinsäure, Adipinsäure, Sebacinsäure, Phthalsäure, Isophthalsäure, Trimellithsäure, Phthalsäureanhydrid, Tetrahydrophthalsäure, Maleinsäure, Maleinsäureanhydrid, dimere und trimere Fettsäuren, Terephthalsäuredimethylester und Terephthalsäure-bis-glykolester.

Zur Herstellung der Esteralkohole können auch Gemische der beispielhaft genannten Ausgangsverbindungen eingesetzt werden. Weiterhin ist es möglich beim erfindungsgemäßen Verfahren Gemische verschiedener Esteralkohole der genannten Art zu verwenden.

Bevorzugt kommen beim erfindungsgemäßen Verfahren als Ausgangskomponente C) Esterpolyole zum Einsatz, wie sie sich in an sich bekannter Weise aus Lactonen und einfachen mehrwertigen Alkoholen als Startermolekülen unter Ringöffnung herstellen lassen.

Geeignete Lactone zur Herstellung dieser Esterpolyole sind beispielsweise β-Propiolacton, γ-Butyrolacton, δ-Valerolacton, ε-Caprolacton, 3,5,5- und 3,3,5-Trimethylcaprolacton oder beliebige Gemische solcher Lactone. Als Startermoleküle dienen beispielsweise die oben beispielhaft genannten mehrwertigen Alkohole des Molekulargewichtsbereichs 62 bis 400 oder beliebige Gemische dieser Alkohole.

Besonders bevorzugte Estergruppen aufweisende Polyhydroxylverbindungen C) für das erfindungsgemäße Verfahren sind Esterdiole des obengenannten Molekulargewichtsbereiches, insbesondere solche auf Basis von ε-Caprolacton.

Ausgangsverbindungen C) für das erfindungsgemäße Verfahren stellen auch Carbonatgruppen aufweisende Polyhydroxylverbindungen dar. Hierbei handelt es sich um Carbonatalkohole der an sich bekannten Art, wie sie beispielsweise durch Umsetzung der oben beispielhaft genannten mehrwertigen Alkohole des Molekulargewicbtsbereiches 62 bis 400 mit Diarylcarbonaten, wie z.B. Diphenylcarbonat, Phosgen oder bevorzugt cyclischen Carbonaten, wie z.B. Trimethylencarbonat oder 2,2-Dimethyl-trimethylencarbonat (Neopentylglykolcarbonat, NPC) oder Gemischen solcher cyclischen Carbonate, erhalten werden können. Besonders bevorzugte Carbonatalkohole sind solche, die aus den genannten mehrwertigen, insbesondere zweiwertigen Alkoholen als Startermolekül und NPC unter Ringöffnung hergestellt werden können.

Als Ausgangsverbindungen C) für das erfindungsgemäße Verfahren eignen sich daneben auch Estergruppen- und Carbonatgruppen aufweisende Polyhydroxylverbindungen. Solche Estercarbonatalkohole sind beispielsweise gemäß der Lehre der DE-A 17 70 245 durch Umsetzung der oben beispielhaft genannten mehrwertigen Alkohole des Molekulargewichtsbereiches 62 bis 400 mit Lactonen der oben beispielhaft genannten Art, insbesondere ε-Caprolacton und anschließende Reaktion der dabei entstehenden Esteralkohole mit Diphenylcarbonat herstellbar. Bevorzugt kommen jedoch Estercarbonatalkohole zum Einsatz, wie sie sich durch Umsetzung der genannten mehrwertigen Alkohole mit Mischungen von Lactonen und cyclischen Carbonaten unter Ringöffnung erhalten lassen.

Die Herstellung der vorstehend beschriebenen, bevorzugt beim erfindungsgemäßen Verfahren eingesetzten Esteralkohole, Carbonatalkohole und Estercarbonatalkohole durch ringöffnende Polymerisation, erfolgt im allgemeinen in Gegenwart von Katalysatoren wie beispielsweise Lewis- oder Brönstedt-Säuren, organischen Zinn- oder Titanverbindungen bei Temperaturen von 20 bis 200°C, vorzugsweise 50 bis 160°C.

Beim erfindungsgemäßen Verfahren können gegebenenfalls Gemische der beispielhaft genannten Esteralkohole, Carbonatalkohole und Estercarbonatalkohole als Ausgangskomponente C) zum Einsatz gelangen.

Gegebenenfalls können beim erfindungsgemäßen Verfahren auch Estergruppen- und Carbonatgruppen-freie Polyhydroxylverbindungen D) des Molekulargewichtsbereiches 62 bis 400 mitverwendet werden. Hierbei handelt es sich beispielsweise um die oben bei der Herstellung der Esteralkohole beschriebenen einfachen mehrwertigen Alkohole oder beliebige Gemische dieser Alkohole. Estergruppen- und Carbonatgruppen-freie Alkohole D) werden, falls überhaupt, in Mengen von bis zu 70 Gew.-% bezogen auf die Gesamtmenge der Ausgangskomponenten C) und D) mitverwendet. Für das erfindungsgemäße Verfahren geeignete Gemische aus Ausgangskomponenten C) und D) resultieren beispielsweise auch dann, wenn die als Ausgangsmaterial eingesetzten mehrwertigen Alkohole der beispielhaft genannten Art mit unterschüssigen Mengen an Säuren bzw. Säurederivaten, Diarylcarbonaten oder cyclischen Carbonaten der beispielhaft genannten Art oder Phosgen nur teilweise in Estergruppen und/oder Carbonatgruppen aufweisende Polyhydroxylverbindungen überführt werden.

Beim erfindungsgemäßen Verfahren können gegebenenfalls noch weitere gegenüber Isocyanatgruppen reaktive, monofunktionelle Verbindungen E) mitverwendet werden. Hierbei handelt es sich beispielsweise um einfache aliphatische bzw. cycloaliphatische Monoalkohole, wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole und Hydroxymethylcyclohexan, Etheralkohole, wie 2-Methoxyethanol, 2-Ethoxyethanol, 2-Propoxyethanol, 2-Butoxyethanol, Diethylenglykol-monomethylether, Diethylenglykol-monoethylether, Diethylenglykol-monobutylether, 3-Methoxy-1-butanol und Glycerin-1,3-diethylether, oder Esteralkohole, wie Hydroxyethylacetat, Butylglycolat, Ethyllactat, Glycerindiacetat oder solche, wie sie sich durch Umsetzung der genannten Monoalkohole mit Lactonen erhalten lassen.

Diese monofunktionellen Verbindungen E) kommen gegebenenfalls in Mengen von bis zu 20 Gew.-%, vorzugsweise 15 Gew.-%, bezogen auf das Gesamtgewicht der gegenüber Isocyanaten reaktiven Ausgangsverbindungen C), D) und E) zum Einsatz.

Bevorzugte Ausgangsverbindungen E) für das erfindungsgemäße Verfahren sind die einfachen aliphatischen oder cycloaliphatischen Monoalkohole der genannten Art.

Zur Durchführung des erfindungsgemäßen Verfahrens werden die Uretdiongruppen enthaltenden Polyisocyanatgemische A), gegebenenfalls unter Mitverwendung weiterer Diisocyanate B) mit Estergruppen und/oder Carbonatgruppen aufweisenden Polyhydroxylverbindungen C), gegebenenfalls unter Mitverwendung weiterer Estergruppen- und Carbonatgruppen-freier Polyhydroxylverbindungen D) und gegebenenfalls weiteren gegenüber Isocyanaten reaktiven, monofunktionellen Verbindungen E) in dem genannten Äquivalent-Verhältnis von Isocyanatgruppen zu gegenüber Isocyanaten reaktiven Gruppen von 1,2:1 bis 1,8:1, vorzugsweise 1,25:1 bis 1,6:1 bei einer Reaktionstemperatur von 40 bis 200°C, besonders bevorzugt von 60 bis 180°C, vorzugsweise bis zum Erreichen des theoretisch errechneten NCO-Gehaltes umgesetzt.

Dabei werden im übrigen Art und Mengenverhältnisse der genannten Ausgangskomponenten im Rahmen der gemachten Angaben so gewählt, daß die resultierenden Polyadditionsverbindungen den oben unter a) bis d) gemachten Angaben entsprechen, wobei (a) die Polyadditionsverbindungen vorzugsweise eine mittlere Funktionalität von 2,3 bis 6,0, besonders bevorzugt von 2,5 bis 5,0 und einen Gehalt an freien Isocyanatgruppen von vorzugsweise 2,2 bis 5,0 Gew.-%, besonders bevorzugt 2,4 bis 4,0 Gew.-%, aufweisen und (b) der Gehalt an Uretdiongruppen vorzugsweise 11 bis 17 Gew.-%, besonders bevorzugt 12 bis 16 Gew.-%, (c) der Gehalt an Urethangruppen vorzugsweise 12 bis 19 Gew.-%, besonders bevorzugt 14 bis 18 Gew.-% und (d) der Gehalt an Carbonsäureestergruppen und/oder Carbonatgruppen vorzugsweise 2 bis 12 Gew.-%, besonders bevorzugt 3 bis 10 Gew.-% beträgt, und wobei die Polyadditionsverbindungen unterhalb 40°C fest und oberhalb 125°C flüssig sind, insbesondere einen nach der Differential-Thermoanalyse (DTA) bestimmten Schmelzpunkt bzw. Schmelzbereich aufweisen, der innerhalb eines Temperaturbereiches von 40 bis 110°C, besonders bevorzugt innerhalb des Temperaturbereiches von 50 bis 100°C liegt.

Die erfindungsgemäßen Uretdiongruppen aufweisenden Polyadditionsprodukte zeichnen sich bereits bei Temperaturen nur wenig oberhalb ihres Schmelzpunktes bzw. Schmelzbereiches durch sehr niedrige Schmelzviskositäten aus. Sie lassen sich nach dem erfindungsgemäßen Verfahren sehr einfach in der Schmelze bei Temperaturen unterhalb der Rückspalttemperatur von Uretdiongruppen herstellen. Obwohl beim erfindungsgemäßen Verfahren die Isocyanatkomponenten in einem molaren Überschuß bezogen auf die Polyolkomponenten eingesetzt werden, fallen die erfindungsgemäßen Verfahrensprodukte daher im allgemeinen monomerenarm, d.h. mit Gehalten an monomeren Diisocyanaten von im allgemeinen weniger als 1,0 Gew.-%, vorzugsweise weniger als 0,5 Gew.-%, besonders bevorzugt weniger als 0,3 Gew.-% an.

Die Umsetzung kann auch in speziellen Apparaturen, wie z. B. Intensivknetern oder statischen Mischem, bei Temperaturen im Rückspaltbereich von Uretdionen durchgeführt werden, ohne daß in größerem Maße ein Anstieg an monomeren Diisocyanaten zu beobachten ist, wenn dabei ausreichend kurze Reaktionszeiten, von beispielsweise weniger als 5 Minuten, eingehalten werden.

Selbstverständlich kann die Umsetzung gegebenenfalls auch in einem geeigneten, gegenüber Isocyanatgruppen inerten Lösemittel durchgeführt werden. Geeignete Lösemittel für diese weniger bevorzugte Vorgehensweise sind beispielsweise die an sich bekannten üblichen Lacklösemittel wie z.B. Ethylacetat, Butylacetat, Ethylenglykolmonomethyl- oder -ethyletheracetat, 1-Methoxypropyl-2-acetat, 2-Butanon, 4-Methyl-2-pentanon, Cyclohexanon, Toluol, oder deren Gemische, aber auch Lösemittel wie Propylenglykoldiacetat, Diethylenglykoldimethylether, Diethylenglykolethyl- und -butyletheracetat, N-Methylpyrrolidon und N-Methylcaprolactam, oder Gemische solcher Lösemittel.

Diese gegebenenfalls mitverwendeten Lösemittel werden nach erfolgter Umsetzung mit Hilfe geeigneter Methoden, beispielsweise durch Ausfallen und einfaches Absaugen, Sprühtrocknung oder Schmelzextrusion in einer Ausdampfschnecke, vom erfindungsgemäßen Verfahrensprodukt abgetrennt.

Zur Beschleunigung der Urethanisierungsreaktion können beim-erfindungsgemäßen Verfahren die üblichen aus der Polyurethanchemie bekannten Katalysatoren eingesetzt werden, beispielsweise tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-octoat, Zinn(II)-ethylcaproat, Zinn(II)-palmitat, Dibutylzinn(IV)-dilaurat und Molybdänglykolat.

Diese Katalysatoren kommen gegebenenfalls in Mengen von 0,001 bis 2,0 Gew.-%, bevorzugt 0,01 bis 0,2 Gew.-%, bezogen auf die Gesamtmenge der verwendeten Ausgangsverbindungen zum Einsatz.

Die erfindungsgemäßen Polyadditionsverbindungen stellen wertvolle Ausgangsmaterialien zur Herstellung von Polyurethankunststoffen nach dem Isocyanat-Polyadditionsverfahren dar. Sie finden insbesondere Verwendung als Vernetzerkomponente in hitzehärtbaren blockierungsmittelfreien PUR-Pulverlacken.

Geeignete Reaktionspartner für die erfindungsgemäßen Polyadditionsverbindungen sind dabei grundsätzlich die aus der Pulverlack-Technologie bekannten Bindemittel mit gegenüber Isocyanaten reaktionsfähigen Gruppen, wie z.B. Hydroxyl-, Carboxyl-, Amino-, Thiol-, Urethan- oder Harnstoffgruppen. Bevorzugt kommen hydroxyfunktionelle Pulverlackbindemittel zum Einsatz, die unterhalb 40°C fest und oberhalb 130°C flüssig sind. Die Erweichungstemperaturen dieser hydroxyfunktionellen Harze - bestimmt nach der Differential-Thermoanalyse (DTA) - liegen vorzugsweise innerhalb des Temperaturbereiches von 30 bis 120°C, besonders bevorzugt innerhalb des Temperaturbereiches von 35 bis 110°C.

Ihre Hydroxylzahlen liegen zwischen 20 und 200, vorzugsweise zwischen 30 und 130 und ihr mittleres (aus der Funktionalität und dem Hydroxylgehalt errechenbares) Molekulargewicht im allgemeinen zwischen 400 und 10 000, vorzugsweise zwischen 1 000 und 5 000.

Derartige Pulverlackbindemittel sind beispielsweise hydroxylgruppenhaltige Polyester, Polyacrylate oder Polyurethane, wie sie in den obengenannten Veröffentlichungen des Standes der Technik, z. B. der EP-A 45 998, oder der EP-A 254 152 beschrieben sind, aber auch beliebige Mischungen solcher Harze.

Zur Herstellung eines gebrauchsfertigen Pulverlacks werden die erfindungsgemäßen Polyadditionsverbindungen mit geeigneten hydroxyfunktionellen Pulverlackbindemitteln gemischt, gegebenenfalls mit weiteren Hilfs- und Zusatzmitteln, wie z.B. Katalysatoren, Pigmenten, Füllstoffen oder Verlaufsmitteln versetzt, und beispielsweise in Extrudern oder Knetern oberhalb des Schmelzbereichs der Einzelkomponenten, beispielsweise 70 bis 130°C, vorzugsweise 70 bis 110°C, zu einem homogenen Material vereinigt.

Die erfindungsgemäßen Polyadditionsverbindungen und die hydroxyfunktionellen Bindemittel kommen hierbei in solchen Mengenverhältnissen zum Einsatz, daß auf jede Hydroxylgruppe 0,6 bis 1,4, vorzugsweise 0,8 bis 1,2 Isocyanatgruppen entfallen, wobei unter Isocyanatgruppen bei den erfindungsgemäßen Polyadditionsverbindungen die Summe aus in dimerer Form als Uretdiongruppen vorliegenden Isocyanatgruppen und freien Isocyanatgruppen verstanden wird.

Bei den gegebenenfalls zur Beschleunigung der Aushärtung mitzuverwendenden Katalysatoren handelt es sich beispielsweise um die üblichen, aus der Polyurethanchemie bekannten Verbindungen, wie sie schon oben beim erfindungsgemäßen Verfahren zur Reaktionsbeschleunigung beschrieben wurden, oder Amidine, wie z.B. 1,5-Diazabicyclo[4.3.0]non-5-en (DBN), 1,8-Diazabicyclo[5.4.0]undec-7-en (DBU) und 1,2-Dimethyl-tetrahydropyrimidin, die sich nach der Lehre der EP-A 803 524 als besonders geeignete Katalysatoren zur Erniedrigung der Einbrenntemperaturen von Uretdionpulverlackvemetzem erwiesen haben. Diese Katalysatoren können gegebenenfalls in Mengen von 0,01 bis 5,0 Gew.-% vorzugsweise 0,05 bis 2,0 Gew.-%, bezogen auf die Gesamtmenge an organischem Bindemittel, d.h. erfindungsgemäßen Polyadditionsverbindungen in Kombination mit den hydroxyfunktionellen Pulverlackbindemitteln aber exklusive den gegebenenfalls verwendeten weiteren Hilfs- und Zusatzmitteln, zugesetzt werden.

Unter den Bedingungen der Pulverlackherstellung reagieren die freien Isocyanatgruppen der erfindungsgemäßen Polyadditionsverbindungen, wie IR-spektroskopisch Untersuchungen zeigen, praktisch vollständig ab. Der nach Abkühlen der Schmelze resultierende, Isocyanatgruppen-freie Feststoff wird anschließend gemahlen und durch Sieben von den Kornanteilen oberhalb der gewünschten Korngröße, beispielsweise oberhalb 0,1 mm, befreit.

Der so hergestellte sprühfertige Pulverlack kann nach üblichen Pulverauftragsverfahren, wie z. B. elektrostatischem Pulverversprühen oder Wirbelsintern, auf die zu überziehenden Substrate aufgebracht werden. Erfindungsgemäß können beliebige hitzeresistente Substrate, wie beispielsweise solche aus Metallen, Holz oder Glas, beschichtet werden.

Die Härtung der Überzüge erfolgt durch Erhitzen auf Temperaturen von 110 bis 220°C, vorzugsweise 130 bis 200°C beispielsweise während eines Zeitraums von ca. 10 bis 30 Minuten. Man erhält harte und elastische Beschichtungen mit guter Lösemittel- und Chemikalienbeständigkeit, die sich durch einen hervorragenden Verlauf und sehr hohen Glanz auszeichnen.

### Beispiele

Im folgenden beziehen sich alle Prozentangaben, mit Ausnahme der Glanzwerte, auf das Gewicht.

### Ausgangsverbindungen A)

### Polyisocyanat A1)

Analog Beispiel 3 der EP-A-896 973 hergestelltes Uretdionpolyisocyanat auf Basis von 1-Isocyanato-3,3,5-trimethyl-5-isocyanatomethylcyclohexan (IPDI) mit einem Gehalt an freien Isocyanatgruppen von 16,7 %, einem Gehalt an monomerem IPDI von 0,4 %, einer mittleren NCO-Funktionalität von 2,0, einer Viskosität (nach DIN 53 018) von mehr als 200 000 mPas (23°C) und einem Gehalt an Uretdiongruppen (bestimmt durch Heißtitration) von 20,9 %.

### Polyisocyanat A2)

Analog Beispiel 1-a der EP-A-377 177 hergestelltes Uretdion- und Isocyanuratgruppen enthaltendes Polyisocyanat auf Basis von 1,6-Diisocyanatohexan (HDI) mit einem Gehalt an freien Isocyanatgruppen von 21,8 %, einem Gehalt an monomerem HDI von 0,3 %, einer mittleren NCO-Funktionalität von 2,5, einer Viskosität (nach DIN 53 018) von 170 mPas (23°C) und einem Gehalt an Uretdiongruppen (bestimmt durch Heißtitration) von 15,3 %.

### Polyisocyanat A3)

Analog Beispiel 5 der EP-A 45 995 hergestelltes Uretdion- und Isocyanuratgruppen enthaltendes Polyisocyanat auf Basis von IPDI mit einem Gehalt an freien Isocyanatgruppen von 17,2 %, einem Gehalt an monomerem IPDI von 0,9 %, einer mittleren NCO-Funktionalität von 2,2, einer Viskosität (nach DIN 53 018) von mehr als 200 000 mPas (23°C) und einem Gehalt an Uretdiongruppen (bestimmt durch Heißtitration) von 15,4 %.

### Polyisocyanat A4)

Analog Beispiel 7 der EP-A 330 966 hergestelltes Isocyanurat-Polyisocyanat auf Basis von HDI mit einem Gehalt an freien Isocyanatgruppen von 21,8 %, einem Gehalt an monomerem HDI von 0,1 %, einer mittleren NCO-Funktionalität von 3,5 und einer Viskosität (nach DIN 53 018) von 3 500 mPas (23°C).

### Polyisocyanat A5)

Analog Beispiel 3 der EP-A 277 353 hergestelltes Biuret-Polyisocyanat auf Basis von HDI mit einem Gehalt an freien Isocyanatgruppen von 22,0 %, einem Gehalt an monomerem HDI von 0,2 %, einer mittleren NCO-Funktionalität von 4,0 und einer Viskosität (nach DIN 53 018) von 11 000 mPas (23°C).

### Polyisocyanat A6)

Analog Beispiel 1 der EP-A 3 765 hergestelltes lösemittelfreies Isocyanurat-Polyisocyanat auf Basis von IPDI mit einem Gehalt an freien Isocyanatgruppen von 16,4 %, einem Gehalt an monomerem IPDI von 0,2 %, einer mittleren NCO-Funktionalität von 3,4 und einem Schmelzbereich von 100 - 105 °C.

### Herstellung der Ausgangsverbindungen C)

### Estergruppen aufweisendes Diol C 1)

620 g 1,2-Ethandiol und 1 712 g ε-Caprolacton werden bei Raumtemperatur unter trockenem Stickstoff vermischt, mit 0,3 g Zinn(II)-octoat versetzt und anschließend für 5 h auf 160°C erhitzt. Nach Abkühlen auf Raumtemperatur erhält man ein farbloses flüssiges Produkt mit folgenden Kenndaten:

| | |
|---|---|
| η (23°C) | 150 mPas |
| OH-Zahl | 476 mg KOH/g |
| freies ε-Caprolacton | 0,5 % |
| mittleres Molekulargewicht (aus OH-Zahl ber.) | 235 |
| Estergruppengehalt (ber.) | 28,1% |

### Estergruppen aufweisendes Diol C 2)

761 g 1,3-Propandiol und 1712 g ε-Caprolacton werden bei Raumtemperatur unter trockenem Stickstoff vermischt, mit 0,3 g Zinn(II)-octoat versetzt und anschließend für 5 h auf 160°C erhitzt. Nach Abkühlen auf Raumtemperatur erhält man ein farbloses flüssiges Produkt mit folgenden Kenndaten:

| | |
|---|---|
| η (23°C) | 190 mPas |
| OH-Zahl | 449 mg KOH/g |
| freies ε-Caprolacton | 0,3 % |
| mittleres Molekulargewicht (aus OH-Zahl ber.) | 249 |
| Estergruppengehalt (ber.) | 26,7 % |

### Estergruppen aufweisendes Diol C 3)

901 g 1,4-Butandiol und 1712 g ε-Caprolacton werden bei Raumtemperatur unter trockenem Stickstoff vermischt, mit 0,3 g Zinn(II)-octoat versetzt und anschließend für 5 h auf 160°C erhitzt. Nach Abkühlen auf Raumtemperatur erhält man ein farbloses flüssiges Produkt mit folgenden Kenndaten:

| | |
|---|---|
| η (23°C) | 180 mPas |
| OH-Zahl | 416 mg KOH/g |
| freies ε-Caprolacton | 0,1 % |
| mittleres Molekulargewicht (aus OH-Zahl ber.) | 269 |
| Estergruppengehalt (ber.) | 25,3 % |

### Estergruppen aufweisendes Triol C 4)

1 341 g 1,1,1-Trimethylolpropan (TMP) und 1 712 g ε-Caprolacton werden bei Raumtemperatur unter trockenem Stickstoff vermischt, mit 0,3 g Zinn(II)-octoat versetzt und anschließend für 5 h auf 160°C erhitzt. Nach Abkühlen auf Raumtemperatur erhält man ein farbloses flüssiges Produkt mit folgenden Kenndaten:

| | |
|---|---|
| η (23 °C) | 2 400 mPas |
| OH-Zahl | 546 mg KOH/g |
| freies ε-Caprolacton | 0,2 % |
| mittleres Molekulargewicht (aus OH-Zahl ber.) | 308 |
| Estergruppengehalt (ber.) | 21,6 % |

### Carbonatgruppen aufweisendes Diol C 5)

901 g 1,4-Butandiol und 1 300 g NPC werden bei Raumtemperatur unter trockenem Stickstoff vermischt, mit 0,2 g ortho-Phosphorsäure versetzt und anschließend für 8 h auf 160°C erhitzt. Nach Abkühlen auf Raumtemperatur erhält man ein praktisch farbloses flüssiges Produkt mit folgenden Kenndaten:

| | |
|---|---|
| η (23 °C) | 1 500 mPas |
| OH-Zahl | 519 mg KOH/g |
| freies NPC | 0,5 % |
| mittleres Molekulargewicht (aus OH-Zahl ber.) | 216 |
| Carbonatgruppengehalt (ber.) | 20,0 % |

### Beispiel 1

650 g (2,58 val) des uretdiongruppenhaltigen Polyisocyanates A1) werden bei 50°C mit 350 g (1,82 val) des uretdiongruppenhaltigen Polyisocyanates A2) unter trockenem Stickstoff vermischt, anschließend mit 0,1 g Dibutylzinn(IV)-dilaurat (DBTL) als Katalysator versetzt und auf 80°C erwärmt. Zu dieser Mischung, die einen Gehalt an Uretdiongruppen von 18,9 % und eine mittlere NCO-Funktionalität von 2,18 aufweist, gibt man innerhalb von 20 min eine Mischung von 207 g (1,76 val) des Estergruppen aufweisenden Diols C 1) und 55 g (1,77 val) 1,2-Ethandiol zu und rührt bei einer maximalen Reaktionstemperatur von 104°C bis der NCO-Gehalt des Reaktionsgemisches nach ca. 20 min auf einen Wert von 2,9 % abgesunken ist. Die Schmelze wird zum Erkalten auf ein Blech gegossen, und man erhält eine erfindungsgemäße Polyadditionsverbindung als blaßgelbes Festharz mit folgenden Kenndaten:

| | |
|---|---|
| NCO-Gehalt (gef. / ber.) | 2,9/2,9% |
| Uretdiongruppen-Gehalt (ber.) | 15,0% |
| NCO-Gehalt gesamt (ber.) | 17,9% |
| NCO-Funktionalität | 3,4 |
| monomeres IPDI | 0,36 % |
| monomeres HDI | < 0,03 % |
| Schmelzbereich | 79 - 84°C |
| Estergruppen-Gehalt (ber.) | 4,6 % |
| Urethangruppen-Gehalt (ber.) | 16,5 % |

### Beispiel 2

750 g (2,98 val) des uretdiongruppenhaltigen Polyisocyanates A1) werden bei 50°C mit 250 g (1,30 val) des uretdiongruppenhaltigen Polyisocyanates A2) unter trockenem Stickstoff vermischt, anschließend mit 0,1 g Dibutylzinn(IV)-dilaurat (DBTL) als Katalysator versetzt und auf 80°C erwärmt. Zu dieser Mischung, die einen Gehalt an Uretdiongruppen von 19,5 % und eine mittlere NCO-Funktionalität von 2,13 aufweist, gibt man innerhalb von 20 min eine Mischung von 201 g (1,71 val) des Estergruppen aufweisenden Diols C 1) und 53 g (1,71 val) 1,2-Ethandiol zu und rührt bei einer maximalen Reaktionstemperatur von 109°C bis der NCO-Gehalt des Reaktionsgemisches nach ca. 20 min auf einen Wert von 3,0 % abgesunken ist. Die Schmelze wird zum Erkalten auf ein Blech gegossen, und man erhält eine erfindungsgemäße Polyadditionsverbindung als blaßgelbes Festharz mit folgenden Kenndaten:

| | |
|---|---|
| NCO-Gehalt (gef. / ber.) | 3,0/2,9% |
| Uretdiongruppen-Gehalt (ber.) | 15,2 % |
| NCO-Gehalt gesamt (ber.) | 17,1% |
| NCO-Funktionalität | 2,9 |
| monomeres IPDI | 0,22 % |
| monomeres HDI | < 0,03 % |
| Schmelzbereich: | 76-83°C |
| Estergruppen-Gehalt (ber.) | 4,5 % |
| Urethangruppen-Gehalt (ber.) | 16,1 % |

### Beispiel 3

900 g (3,58 val) des uretdiongruppenhaltigen Polyisocyanates A1) werden bei 50°C mit 100 g (0,52 val) des Isocyanurat-Polyisocyanates A4) unter trockenem Stickstoff vermischt, anschließend mit 0,1 g Dibutylzinn(IV)-dilaurat (DBTL) als Katalysator versetzt und auf 80°C erwärmt. Zu dieser Mischung, die einen Gehalt an Uretdiongruppen von 18,8 % und eine mittlere NCO-Funktionalität von 2,12 aufweist, gibt man innerhalb von 20 min eine Mischung von 221 g (1,64 val) des Estergruppen aufweisenden Diols C 3) und 74 g (1,64 val) 1,4-Butandiol zu und rührt bei einer maximalen Reaktionstemperatur von 111°C bis der NCO-Gehalt des Reaktionsgemisches nach ca. 20 min auf einen Wert von 2,8 % abgesunken ist. Die Schmelze wird zum Erkalten auf ein Blech gegossen, und man erhält eine erfindungsgemäße Polyadditionsverbindung als blaßgelbes Festharz mit folgenden Kenndaten:

| | |
|---|---|
| NCO-Gehalt (gef. / ber.) | 2,8 / 2,7 % |
| Uretdiongruppen-Gehalt (ber.) | 14,5 % |
| NCO-Gehalt gesamt (ber.) | 17,2 % |
| NCO-Funktionalität | 2,8 |
| monomeres IPDI | 0,31 % |
| monomeres HDI | < 0,03 % |
| Schmelzbereich | 83 - 88°C |
| Estergruppen-Gehalt (ber.) | 4,3 % |
| Urethangruppen-Gehalt (ber.) | 14,9 % |

### Beispiel 4

900 g (3,58 val) des uretdiongruppenhaltigen Polyisocyanates A1) werden bei 50°C mit 100 g (0,52 val) des Biuret-Polyisocyanates A5) unter trockenem Stickstoff vermischt, anschließend mit 0,1 g Dibutylzinn(IV)-dilaurat (DBTL) als Katalysator versetzt und auf 80°C erwärmt. Zu dieser Mischung, die einen Gehalt an Uretdiongruppen von 18,8 % und eine mittlere NCO-Funktionalität von 2,14 aufweist, gibt man innerhalb von 20 min eine Mischung von 204 g (1,64 val) des Estergruppen aufweisenden Diols C 2) und 62 g (1,63 val) 1,3-Propandiol zu und rührt bei einer maximalen Reaktionstemperatur von 106°C bis der NCO-Gehalt des Reaktionsgemisches nach ca. 20 min auf einen Wert von 3,0 % abgesunken ist. Die Schmelze wird zum Erkalten auf ein Blech gegossen, und man erhält eine erfindungsgemäße Polyadditionsverbindung als blaßgelbes Festharz mit folgenden Kenndaten:

| | |
|---|---|
| NCO-Gehalt (gef. / ber.) | 3,0/2,8 % |
| Uretdiongruppen-Gehalt (ber.) | 14,8 % |
| NCO-Gehalt gesamt (ber.) | 17,6 % |
| NCO-Funktionalität | 2,9 |
| monomeres IPDI | 0,29 % |
| monomeres HDI | < 0,03 % |
| Schmelzbereich | 81 - 87°C |
| Estergruppen-Gehalt (ber.) | 4,1 % |
| Urethangruppen-Gehalt (ber.) | 15,2 % |

### Beispiel 5

700 g (2,78 val) des uretdiongruppenhaltigen Polyisocyanates A1) werden bei 60°C mit 300 g (1,17 val) pulverisiertem Isocyanurat-Polyisocyanat A6) unter trockenem Strickstoff vermischt, anschließend mit 0,1 g Dibutylzinn(IV)-dilaurat (DBTL) als Katalysator versetzt und auf 80°C erwärmt. Zu dieser Mischung, die einen Gehalt an Uretdiongruppen von 14,6 % und eine mittlere NCO-Funktionalität von 2,28 aufweist, gibt man innerhalb von 20 min eine Mischung von 197 g (1,58 val) des Estergruppen aufweisenden Diols C 2) und 60 g (1,58 val) 1,3-Propandiol zu und rührt bei einer maximalen Reaktionstemperatur von 121°C bis der NCO-Gehalt des Reaktionsgemisches nach ca. 15 min auf einen Wert von 3,0 % abgesunken ist. Die Schmelze wird zum Erkalten auf ein Blech gegossen, und man erhält eine erfindungsgemäße Polyadditionsverbindung als hellgelbes Festharz mit folgenden Kenndaten:

| | |
|---|---|
| NCO-Gehalt (gef. / ber.) | 3,0 / 2,6 % |
| Uretdiongruppen-Gehalt (ber.) | 11,6 % |
| NCO-Gehalt gesamt (ber.) | 14,2 % |
| NCO-Funktionalität | 5,3 |
| monomeres IPDI | 0,43 % |
| Schmelzbereich | 113 - 119°C |
| Estergruppen-Gehalt (ber.) | 4,2% |
| Urethangruppen-Gehalt (ber.) | 14,8 % |

### Beispiel 6

850 g (3,48 val) des Uretdion- und Isocyanuratgruppen enthaltenden Polyisocyanates A3) werden bei 50°C mit 150 g (0,78 val) des Uretdion- und Isocyanuratgruppen enthaltenden Polyisocyanates A2) unter trockenem Stickstoff vermischt, anschließend mit 0,1 g Dibutylzinn(IV)-dilaurat (DBTL) als Katalysator versetzt und auf 80°C erwärmt. Zu dieser Mischung, die einen Gehalt an Uretdiongruppen von 15,3 % und eine mittlere NCO-Funktionalität von 2,25 aufweist, gibt man innerhalb von 20 min eine Mischung von 212 g (1,70 val) des Estergruppen aufweisenden Diols C 2) und 65 g (1,71 val) 1,3-Propandiol zu und rührt bei einer maximalen Reaktionstemperatur von 106°C bis der NCO-Gehalt des Reaktionsgemisches nach ca. 15 min auf einen Wert von 2,9 % abgesunken ist. Die Schmelze wird zum Erkalten auf ein Blech gegossen, und man erhält eine erfindungsgemäße Polyadditionsverbindung als hellgelbes Festharz mit folgenden Kenndaten:

| | |
|---|---|
| NCO-Gehalt (gef. / ber.) | 2,9 / 2,8 % |
| Uretdiongruppen-Gehalt (ber.) | 12,0 % |
| NCO-Gehalt gesamt (ber.) | 14,8 % |
| NCO-Funktionalität | 4,5 |
| monomeres IPDI | 0,30 % |
| monomeres HDI | < 0,03 % |
| Schmelzbereich | 80 - 88°C |
| Estergruppen-Gehalt (ber.) | 4,4 % |
| Urethangruppen-Gehalt (ber.) | 15,8 % . |

### Beispiel 7

750 g (2,98 val) des uretdiongruppenhaltigen Polyisocyanates A1) werden bei 50°C mit 250 g (1,30 val) des uretdiongruppenhaltigen Polyisocyanates A2) unter trockenem Stickstoff vermischt, anschließend mit 0,1 g Dibutylzinn(IV)-dilaurat (DBTL) als Katalysator versetzt und auf 80°C erwärmt. Zu dieser Mischung, die einen Gehalt an Uretdiongruppen von 19,5 % und eine mittlere NCO-Funktionalität von 2,13 aufweist, gibt man innerhalb von 20 min eine Mischung von 185 g (1,71 val) des Carbonatgruppen aufweisenden Diols C 5) und 77 g (1,71 val) 1,4-Butandiol zu und rührt bei einer maximalen Reaktionstemperatur von 107°C bis der NCO-Gehalt des Reaktionsgemisches nach ca. 20 min auf einen Wert von 2,9 % abgesunken ist. Die Schmelze wird zum Erkalten auf ein Blech gegossen, und man erhält eine erfindungsgemäße Polyadditionsverbindung als schwachgelbes Festharz mit folgenden Kenndaten:

| | |
|---|---|
| NCO-Gehalt (gef. / ber.) | 2,9/2,8% |
| Uretdiongruppen-Gehalt (ber.) | 15,5% |
| NCO-Gehalt gesamt (ber.) | 17,7% |
| NCO-Funktionalität | 2,9 |
| monomeres IPDI | 0,29 % |
| Schmelzbereich | 80-86°C |
| Carbonatgruppen-Gehalt (ber.) | 2,9 % |
| Urethangruppen-Gehalt (ber.) | 16,0 % |

### Beispiel 8

900 g (3,58 val) des uretdiongruppenhaltigen Polyisocyanates A1) werden bei 50°C mit 100 g (0,52 val) des Isocyanurat-Polyisocyanates A4) unter trockenem Stickstoff vermischt, anschließend mit 0,1 g Dibutylzinn(IV)-dilaurat (DBTL) als Katalysator versetzt und auf 80°C erwärmt. Zu dieser Mischung, die einen Gehalt an Uretdiongruppen von 18,8 % und eine mittlere NCO-Funktionalität von 2,12 aufweist, gibt man innerhalb von 20 min eine Mischung von 126 g (0,82 val) des Estergruppen aufweisenden Triols C 4), 167 g (1,24 val) des Estergruppen aufweisenden Diols C 3) und 56 g (1,24 val) 1,4-Butandiol zu und rührt bei einer maximalen Reaktionstemperatur von 113°C bis der NCO-Gehalt des Reaktionsgemisches nach ca. 15 min auf einen Wert von 2,8 % abgesunken ist. Die Schmelze wird zum Erkalten auf ein Blech gegossen, und man erhält eine erfindungsgemäße Polyadditionsverbindung als hellgelbes Festharz mit folgenden Kenndaten:

| | |
|---|---|
| NCO-Gehalt (gef. / ber.) | 2,8/2,5% |
| Uretdiongruppen-Gehalt (ber.) | 14,0 % |
| NCO-Gehalt gesamt (ber.) | 16,5% |
| NCO-Funktionalität | 5,3 |
| monomeres IPDI | 0,41 % |
| monomeres HDI | < 0,03 % |
| Schmelzbereich | 87 - 94°C |
| Estergruppen-Gehalt (ber.) | 5,1 % |
| Urethangruppen-Gehalt (ber.) | 14,4 % |

### Beispiel 9 (Vergleich)

650 g (2,58 val) des uretdiongruppenhaltigen Polyisocyanates A1) werden bei 50°C mit 350 g (1,82 val) des uretdiongruppenhaltigen Polyisocyanates A2) unter trockenem Stickstoff vermischt, anschließend mit 0,1 g Dibutylzinn(IV)-dilaurat (DBTL) als Katalysator versetzt und auf 80°C erwärmt. Zu dieser Mischung, die einen Gehalt an Uretdiongruppen von 18,9 % und eine mittlere NCO-Funktionalität von 2,18 aufweist, gibt man innerhalb von 30 min 158 g (3,51 val) 1,4-Butandiol zu. Bereits während der Diolzugabe muß wegen der rasch ansteigenden Viskosität der Reaktionsmischung, um die Rührfähigkeit weiter zu gewährleisten, die Heizbadtemperatur auf 135°C erhöht werden. Nach 10 min beträgt der NCO-Gehalt der Reaktionsmischung 4,1 %. Nach 20 min ist die Temperatur des Reaktionsgemisches aufgrund der weiter angestiegenen Viskosität unter der Einwirkung der beim Rühren auftretenden Scherkräfte trotz einer gleichbleibenden Außentemperatur von 135°C auf 158°C angestiegen. Der NCO-Gehalt hat sich auf 5,2 % erhöht erhöht und sinkt auch bei längerer Reaktionsdauer nicht wieder ab. Der Gehalt an monomerem IPDI beträgt 1,9 %.

### Beispiel 10 (Vergleich)

650 g (2,58 val) des uretdiongruppenhaltigen Polyisocyanates A1) werden bei 50°C mit 350 g (1,82 val) des uretdiongruppenhaltigen Polyisocyanates A2) unter trockenem Stickstoff vermischt, anschließend mit 0,1 g Dibutylzinn(IV)-dilaurat (DBTL) als Katalysator versetzt und auf 80°C erwärmt. Zu dieser Mischung, die einen Gehalt an Uretdiongruppen von 18,9 % und eine mittlere NCO-Funktionalität von 2,18 aufweist, gibt man portionsweise innerhalb von 30 min 358 g (3,51 val) Hydroxypivalinsäureneopentylglykolester zu. Bereits gegen Ende der Diolzugabe muß wegen der stark ansteigenden Viskosität der Reaktionsmischung die Heizbadtemperatur auf 130°C erhöht werden, um die Rührfähigkeit weiter zu gewährleisten. Nach 15 min beträgt der NCO-Gehalt der Reaktionsmischung 3,5 %. Nach 20 min ist die Temperatur des Reaktionsgemisches aufgrund der weiter angestiegenen Viskosität unter der Einwirkung der beim Rühren auftretenden Scherkräfte trotz einer gleichbleibenden Außentemperatur von 130°C auf 151°C angestiegen. Der NCO-Gehalt hat sich auf 4,2 % erhöht und sinkt auch bei längerer Reaktionsdauer nicht wieder ab. Der Gehalt an monomerem IPDI beträgt 1,4%.

Die Vergleichsbeispiele 9 und 10 zeigen, daß bei der Umsetzung von verzweigten, Uretdiongruppen enthaltenden Polyisocyanatgemischen mit einfachen Diolen oder Hydroxypivalinsäureneopentylglykolester in der Schmelze entsprechend dem in Beispiel 1 beschriebenen Verfahren in erheblichem Maße Uretdionspaltung eintritt. Die angestrebten NCO-Gehalte von 3,2 % (Beispiel 9) bzw. 2,8 % (Beispiel 10) werden nicht erreicht, die Gehalte an monomerem Diisocyanat übersteigen die Grenze von 1 % deutlich.

### Beispiel 11 (Vergleich)

650 g (2,58 val) des uretdiongruppenhaltigen Polyisocyanates A1) und 350 g (1,82 val) des uretdiongruppenhaltigen Polyisocyanates A2) werden in 1 358 g wasserfreiem Toluol mit 0,1 g Dibutylzinn(IV)-dilaurat (DBTL) als Katalysator bei 80°C unter trockenem Stickstoff vorgelegt. Zu dieser Lösung, die einen Gehalt an Uretdiongruppen von 8,0 % aufweist, gibt man portionsweise innerhalb von 30 min 358 g (3,51 val) Hydroxypivalinsäureneopentylglykolester zu und rührt bei einer Reaktionstemperatur von 100°C bis der NCO-Gehalt auf einen Wert von 1,4 % abgesunken ist. Die erhaltene gelbliche Lösung wird anschließend durch Sprühtrocknung in einem handelsüblichen Laborsprühtrockner Minispray Dryer 190 (Fa. Büchi) vollständig vom Lösungsmittel befreit. Man erhält ein hellgelbes Produkt mit folgenden Kenndaten:

| | |
|---|---|
| NCO-Gehalt (gef. / ber.) | 2,7/2,7% |
| Uretdiongruppen-Gehalt (ber.) | 13,9% |
| NCO-Gehalt gesamt | 16,6 % |
| NCO-Funktionalität | 3,4 |
| monomeres IPDI | 0,15 % |
| monomeres HDI | < 0,03 % |
| Schmelzpunkt | 97 - 101°C |
| Estergruppen-Gehalt (ber.) | 5,7% |
| Urethangruppen-Gehalt (ber.) | 15,2 % |

### Beispiel 12 (Verwendung)

55,1 Gew.-Teile eines handelsüblichen hydroxylgruppenhaltigen Polyesters (Crylcoat® 240, Fa. UCB Chemicals) mit einer OH-Zahl von 30 werden mit 6,9 Gew.-Teilen der erfindungsgemäßen Polyadditionsverbindung aus Beispiel 1, entsprechend einem Äquivalentverhältnis von Gesamt-NCO zu OH von 1:1, 1,5 Gew.-Teilen eines handelsüblichen Verlaufsmittels (Modaflow® Powder III, Fa. Solutia), 1,0 Gew.-Teilen Zinn(II)-palmitat als Katalysator, 0,5 Gew.-Teilen Benzoin und 35,0 Gew.-Teilen eines Weißpigmentes (Kronos 2160, Fa. Kronos Titan) gründlich gemischt und anschließend mit Hilfe eines Buss Cokneters vom Typ PLK 46 bei 100 U/min und einer Gehäusetemperatur von 100 bis 120°C im Verfahrensteil homogenisiert. Nach Abkühlen wird die erstarrte Schmelze mit Hilfe einer Sichtermühle ACM 2 (Fa. Hosokawa Mikropul) mit einem 90 µm Sieb gemahlen und gesiebt. Das so erhaltene Pulver, das nach IR-spektroskopischen Untersuchungen keine freien Isocyanatgruppen mehr enthält, wird mit einer ESB Becherpistole bei einer Hochspannung von 70 kV auf ein entfettetes Stahlblech gespritzt und 15 min bei 180°C ausgehärtet.

Zum Vergleich wird analog aus 54,6 Gew.-Teilen des gleichen hydroxylgruppenhaltigen Polyesters mit 7,4 Gew.-Teilen der gemäß Vergleichsbeispiel 11 erhaltenen Polyadditionsverbindung, 1,5 Gew.-Teilen eines handelsüblichen Verlaufsmittels (Modaflow® Powder III, Fa. Solutia), 1,0 Gew.-Teilen Zinn(II)-palmitat als Katalysator, 0,5 Gew.-Teilen Benzoin und 35,0 Gew.-Teilen eines Weißpigmentes (Kronos 2160, Fa. Kronos Titan) ein Pulverlack hergestellt, auf ein entfettetes Stahlblech gespritzt und ebenfalls 15 min bei 180°C ausgehärtet. Das Äquivalentverhältnis von Gesamt-NCO zu OH liegt ebenfalls bei 1:1.

Beide Beschichtungen wurden anschließend lacktechnisch untersucht. Neben Glanzund Trübungswerten wurde zur Charakterisierung der Oberflächenstruktur der mit Hilfe eines Gerätes "wave-scan *plus*" der Fa. Byk-Gardner gemessene Orangenschaleneffekt herangezogen. Bei Schichtdicken von ca. 60 µm werden folgende Eigenschaften gefunden:

| Pulverlack mit Polyadditionsverbindung aus | | Beispiel 1 | Beispiel 11 (Vergleich) |
|---|---|---|---|
| Impact (ASTM-D-2794-69) | | > 80 ip | 10 ip |
| Glanz 60°/20°(DIN 67530) | | 98/85 | 89/51 |
| Haze (DIN 67530; ISO 2813) | | 46 | 88 |
| Wave scan: | long wave | 34,5 | 57,2 |
| | short wave | 38,2 | 68,4 |
| | tension | 10,4 | 6,7 |

Der Vergleich zeigt, daß mit Hilfe der erfindungsgemäßen Polyadditionsverbindung ein vollvernetzter Lackfilm erhalten wird, der sich gegenüber der Beschichtung, die unter Verwendung der bekannten Polyadditionsverbindung des Standes der Technik hergestellt wurde, durch eine erheblich höhere Elastizität, einen höheren Glanz, geringere Trübung und einen deutlich besseren Verlauf auszeichnet. Während der erfindungsgemäß erhaltene Lackfilm glatt verlaufen ist, zeigt die Vergleichsbeschichtung eine starke Orangenschalenstruktur auf.

### Beispiel 13 bis 15 (Verwendung)

Nach dem in Beispiel 12 beschriebenen Verfahren werden ausgehend vom in Beispiel 12 beschriebenen hydroxylgruppenhaltigen Polyester und den erfmdungsgemäßen Polyadditionsverbindungen 2, 3 und 6 weiß pigmentierte Pulverlacke hergestellt. Die fertig formulierten Pulverlacke, die nach IR-spektroskopischen Untersuchungen in allen Fällen frei von unblockierten Isocyanatgruppen sind, werden jeweils mit einer ESB-Becherpistole bei einer Hochspannung von 70 KV auf entfettetes Stahlblech gespritzt und 15 min bei 180°C ausgehärtet. Die nachfolgende Tabelle zeigt die Zusammensetzungen (Gew.-Teile) der Pulverlacke sowie die lacktechnischen Daten der daraus erhaltenen Beschichtungen (Schichtdicke jeweils etwa 60 µm).

| | | | Beispiel 13 | Beispiel 14 | Beispiel 15 |
|---|---|---|---|---|---|
| Crylcoat® 240 | | | 54,8 | 54,8 | 53,8 |
| Polyadditionsverbindung aus | | Beispiel 2 | 7,2 | - | - |
| | | Beispiel 3 | - | 7,2 | - |
| | | Beispiel 6 | - | - | 8,2 |
| Modaflow® Powder III | | | 1,5 | 1,5 | 1,5 |
| Zinn(II)-palmitat | | | 1,0 | 1,0 | 1,0 |
| Benzoin | | | 0,5 | 0,5 | 0,5 |
| Kronos 2160 | | | 35,0 | 35,0 | 35,0 |
| Impact (ASTM-D-2794-69) | | | > 80 ip | > 80 ip | > 80 ip |
| Glanz 60°/20°(DIN 67530) | | | 102/89 | 103/88 | 102/86 |
| Haze (DIN 67530; ISO 2813) | | | 51 | 52 | 50 |
| Wave scan: | long wave | | 28,0 | 33,5 | 42,0 |
| | short wave | | 33,6 | 42,5 | 46,6 |
| | tension | | 11,7 | 10,6 | 9,1 |

## Patentansprüche

1. Polyadditionsverbindungen, die unterhalb von 40°C in fester und oberhalb von 125°C in flüssiger Form vorliegen und
a) bei einer mittleren Isocyanatfunktionalität von 2,0 bis 8,0 einen Gehalt an freien Isocyanatgruppen (berechnet als NCO; Molekulargewicht = 42) von 2,1 bis 6,0 Gew.-%,
b) einen Gehalt an Uretdiongruppen (berechnet als C₂N₂O₂; Molekulargewicht = 84) von 10 bis 18 Gew.-%,
c) einen Gehalt an Urethangruppen (berechnet als -NH-CO-O; Molekulargewicht = 59) von 10 bis 20 Gew.-% und
d) einen Gehalt an Estergruppen -CO-O (berechnet als -CO-O; Molekulargewicht = 44) und/oder Carbonatgruppen -O-CO-O (berechnet als -CO-O; Molekulargewicht = 44) von 1 bis 17 Gew.-% aufweisen,
hergestellt durch Umsetzung von Uretdiongruppen enthaltenden Isocyanatkomponenten einer mittleren NCO-Funktionalität von mindestens 2,1, ausgenommen reinen, durch Trialkylphosphin-Katalyse hergestellten Derivaten von 1-Isocyanato-3,3,5-trimethyl-5-isocyanatomethylcyclohexan, mit Esterund/oder Carbonatgruppen enthaltenden Polyolen, ausgenommen Hydroxypivalinsäureneopentylglykolester.

2. Verfahren zur Herstellung uretdiongruppenhaltiger Polyadditionsverbindungen, **dadurch gekennzeichnet, daß** man
A) Uretdiongruppen enthaltende Polyisocyanatgemische einer mittleren NCO-Funktionalität von mindestens 2,1, ausgenommen reine, durch Trialkylphosphin-Katalyse hergestellte Derivate von 1-Isocyanato-3,3,5-trimethyl-5-isocyanatomethylcyclohexan, gegebenenfalls unter Mitverwendung von
B) weiteren Diisocyanaten in einer Menge von bis zu 10 Gew.-%, bezogen auf das Gesamtgewicht der Komponenten A) und B), mit
C) Estergruppen und/oder Carbonatgruppen aufweisenden Polyhydroxylverbindungen eines mittleren Molekulargewichtes von 134 bis 2 000, ausgenommen Hydroxypivalinsäureneopentylglykolester, gegebenenfalls unter gleichzeitiger Mitverwendung von
D) weiteren Estergruppen- und Carbonatgruppen-freien Polyhydroxylverbindungen eines Molekulargewichtes von 62 - 400 in einer Menge von bis zu 70 Gew.-%, bezogen auf das Gesamtgewicht der Komponenten C) und D), und/oder gegebenenfalls
E) weiteren gegenüber Isocyanatgruppen reaktiven, monofunktionellen Verbindungen in einer Menge von bis zu 20 Gew.-%, bezogen auf das Gesamtgewicht der Komponenten C), D) und E),
unter Einhaltung eines Äquivalentverhältnisses von Isocyanatgruppen zu gegenüber Isocyanaten reaktiven Gruppen von 1,2:1 bis 1,8:1 miteinander umsetzt, wobei im übrigen Art und Mengenverhältnisse der genannten Ausgangsstoffe so gewählt werden, daß die resultierenden Verfahrensprodukte den oben unter a) bis d) genannten Bedingungen entsprechen.

3. Verfahren gemäß Anspruch 2, **dadurch gekennzeichnet, daß** man als Ausgangsverbindungen A) Uretdiongruppen enthaltende Polyisocyanatgemische auf Basis von Diisocyanaten mit aliphatisch und/oder cycloaliphatisch gebundenen Isocyanatgruppen, ausgenommen reine, durch Trialkylphosphin-Katalyse hergestellte Derivate von 1-Isocyanato-3,3,5-trimethyl-5-isocyanatomethylcyclohexan, einsetzt.

4. Verfahren gemäß Anspruch 2, **dadurch gekennzeichnet, daß** man als Ausgangsverbindungen A) Uretdion- und Isocyanuratgruppen enthaltende Polyisocyanatgemische auf Basis von 1,6-Diisocyanatohexan und/oder 1-Isocyanato-3,3,5-trimethyl-5-isocyanatomethylcyclohexan, ausgenommen reine, durch Trialkylphosphin-Katalyse hergestellte Derivate von 1-Isocyanato-3,3,5-trimethyl-5-isocyanatomethylcyclohexan, einsetzt.

5. Verfahren gemäß Anspruch 2, **dadurch gekennzeichnet, daß** man als Polyhydroxylverbindungen C) durch ringöffnende Polymerisation von ε-Caprolacton hergestellte Polyesterpolyole verwendet.

6. Verwendung der Polyadditionsverbindungen gemäß Anspruch 1 als Ausgangskomponente bei der Herstellung von Polyurethankunststoffen.

7. Verwendung der Polyadditionsverbindungen gemäß Anspruch 1 als Vernetzerkomponente in Hitze-vernetzbaren Zweikomponenten-Polyurethan-Pulverlacken bei der Beschichtung beliebiger hitzeresistenter Substrate nach den Methoden der Pulverlacktechnologie.

## Claims

1. Polyaddition compounds which are present in the solid form below 40°C and in the liquid form above 125°C and have
a) a concentration of free isocyanate groups (calculated as NCO; molecular weight = 42) of 2.1 to 6.0 wt.% with an average isocyanate functionality of 2.1 to 8.0,
b) a concentration of uretdione groups (calculated as C₂N₂O₂; molecular weight = 84) of 10 to 18 wt.%,
c) a concentration of urethane groups (calculated as -NH-CO-O; molecular weight = 59) of 10 to 20 wt.% and
d) a concentration of ester groups -CO-O (calculated as -CO-O; molecular weight = 44) and/or carbonate groups -O-CO-O (calculated as -CO-O; molecular weight = 44) of 1 to 17 wt.%
prepared by reacting uretdione group-containing isocyanate components with an average NCO functionality of at least 2.1, except for derivatives of 1-isocyanato-3,3,5-trimethyl-5-isocyantomethylcyclohexane prepared purely by trialkylphosphine catalysis, with ester and/or carbonate group-containing polyols, except for neopentylglycol hydroxypivalate.

2. A process for preparing uretdione group-containing polyaddition compounds, **characterised in that**
A) uretdione group-containing polyisocyanate mixtures with an average NCO functionality of at least 2.1, except for derivatives of 1-isocyanato-3,3,5-trimethyl-5-isocyantomethylcyclohexane prepared purely by trialkylphosphine catalysis, optionally with the co-use of
B) other diisocyanates in an amount of up to 10 wt.%, with respect to the total weight of components A) and B), are reacted with
C) ester and/or carbonate group-containing polyhydroxyl compounds with an average molecular weight of 134 to 2000, except for neopentylglycol hydroxypivalate, optionally with the co-use of
D) other ester and carbonate group-free polyhydroxyl compounds with a molecular weight of 62 - 400 in an amount of up to 70 wt.%, with respect to the total weight of components C) and D), and/or optionally
E) other monofunctional compounds which can react with isocyanate groups, in an amount of up to 20 wt.%, with respect to the total weight of components C), D) and E),
while maintaining a ratio by equivalents of isocyanate groups to groups which can react with isocyanates of 1.2 : 1 to 1.8 :1, wherein the ratios by weight of the starting materials mentioned are otherwise chosen in such a way that the resulting process products correspond to the conditions mentioned under a) to d) above.

3. A process according to Claim 2, **characterised in that** uretdione group-containing polyisocyanate mixtures based on diisocyanates with aliphatically and/or cycloaliphatically bonded isocyanate groups, except for derivatives of 1-isocyanato-3,3,5-trimethyl-5-isocyantomethylcyclohexane prepared purely by trialkylphosphine catalysis, are used as starting compounds A).

4. A process according to Claim 2, **characterised in that** uretdione and isocyanurate group-containing polyisocyanate mixtures based on 1,6-diisocyanatohexane and/or 1-isocyanato-3,3,5-trimethyl-5-isocyantomethylcyclohexane except for derivatives of 1-isocyanato-3,3,5-trimethyl-5-isocyantomethylcyclohexane prepared purely by trialkylphosphine catalysis, are used as starting compounds A).

5. A process according to Claim 2, **characterised in that** polyesterpolyols prepared by ring-opening polymerisation of ε-caprolactone are used as polyhydroxyl compounds C).

6. Use of polyaddition compounds according to Claim 1 as starting components for the preparation of polyurethane plastics.

7. Use of polyaddition compounds according to Claim 1 as cross-linking components in heat-curable two-component polyurethane powder coatings for the coating of any heat-resistant substrates by the methods of powder coating technology.

## Revendications

1. Composés de polyaddition qui sont sous forme solide à moins de 40°C et sous forme liquide à plus de 125°C et
a) présentent, pour une fonctionnalité moyenne des isocyanates de 2,0 à 8,0, une teneur en groupes isocyanate libres (calculés comme NCO; poids moléculaire = 42) de 2,1 à 6,0 % en poids,
b) une teneur en groupes uretdione (calculés comme C₂N₂O₂; poids moléculaire = 84) de 10 à 18% en poids,
c) une teneur en groupes uréthanne (calculés comme -NH-CO-O; poids moléculaire = 59) de 10 à 20% en poids et
d) une teneur en groupes ester -CO-O (calculés comme -CO-O; poids moléculaire = 44) et/ou de groupes carbonate -O-CO-O (calculés comme -CO-O; poids moléculaire = 44) de 1 à 17% en poids,
préparés par mise en réaction de composants isocyanate contenant des groupes uretdione d'une fonctionnalité NCO moyenne d'au moins 2,1, à l'exception de dérivés purs préparés par catalyse de trialkylphosphine de 1-isocyanato-3,3,5-triméthyl-5-isocyanatométhylcyclohexane avec des polyols contenant des groupes ester et/ou carbonate, à l'exception de néopentylglycolester d'acide hydroxypivalique.

2. Procédé de préparation de composés de polyaddition contenant des groupes uretdione, **caractérisé en ce que** l'on fait réagir entre eux
A) des mélanges de polyisocyanates contenant des groupes uretdione d'une fonctionnalité NCO moyenne d'au moins 2,1, à l'exception de dérivés purs préparés par catalyse de trialkylphosphine de 1-isocyanato-3,3,5-triméthyl-5-isocyanatométhylcyclohexane, éventuellement avec utilisation conjointe
B) d'autres diisocyanates dans une quantité de max. 10% en poids par rapport au poids total des composants A) et B) avec
C) des composés polyhydroxylés présentant des groupes ester et/ou carbonate d'un poids moléculaire moyen de 134 à 2000, à l'exception du néopentylglycolester d'acide hydroxypivalique, éventuellement avec utilisation simultanée
D) d'autres composés polyhydroxylés exempts de groupes ester et de groupes carbonate d'un poids moléculaire de 62 - 400 dans une quantité de 70% en poids maximum par rapport au poids total des composants C) et D) et/ou éventuellement
E) d'autres composés monofonctionnels réactifs aux groupes isocyanate dans une quantité de 20% en poids maximum par rapport au poids total des composants C), D) et E),
moyennant respect d'un rapport équivalent des groupes isocyanate aux groupes réactifs aux isocyanates de 1,2 : 1 à 1,8 : 1, la nature et les rapports en poids desdites substances de départ étant choisis de telle sorte que les produits du procédé obtenus répondent aux conditions mentionnées sous a) à d).

3. Procédé selon la revendication 2, **caractérisé en ce que** les composés de départ A) sont des mélanges de polyisocyanates contenant des groupes uretdione à base de diisocyanates avec des groupes isocyanate liés aliphatiquement et/ou cycloaliphatiquement, à l'exception de dérivés purs préparés par catalyse de trialkylphosphine de 1-isocyanato-3,3,5-triméthyl-5-isocyanatométhylcyclohexane.

4. Procédé selon la revendication 2, **caractérisé en ce que** l'on utilise comme composés de départ A) des mélanges de polyisocyanates contenant des groupes uretdione et isocyanurate à base de 1,6-diisocyanatohexane et/ou de 1-isocyanato-3,3,5-triméthyl-5-isocyanatométhylcyclohexane, à l'exception de dérivés purs préparés par catalyse de trialkylphosphine de 1-isocyanato-3,3,5-triméthyl-5-isocyanatométhylcyclohexane.

5. Procédé selon la revendication 2, **caractérisé en ce que** l'on utilise comme composés polyhydroxylés C) des polyesterpolyols préparés par polymérisation à ouverture de cycle d'ε-caprolactone.

6. Mise en oeuvre des composés de polyaddition selon la revendication 1 comme composant de départ pour la préparation de plastiques de polyuréthanne.

7. Mise en oeuvre des composés de polyaddition selon la revendication 1 comme composant réticulant dans les vernis en poudre de polyuréthanne à deux composants réticulables à la chaleur pour le revêtement de substrats thermorésistants quelconques selon les méthodes de la technologie des vernis en poudre.
